# EUROPÄISCHE PATENTSCHRIFT

(11) **EP 0 492 539 B1**
(45) Veröffentlichungstag und Bekanntmachung des Hinweises auf die Patenterteilung: **20.04.1994**
(21) Anmeldenummer: 91122009.3
(22) Anmeldetag: 20.12.1991
(51) Int. Cl.: C01C 1/10, B01D 53/34

(54) **Verfahren zum Rückgewinnen bzw. zum Entsorgen von Ammoniak bzw. Ammonium-Verbindungen aus Staubgemischen**
Process for the recovery or disposal of ammonium or ammonium compounds from dust mixtures
Procédé de récupération ou élimination d'ammonium ou composés d'ammonium de poussière

(30) Priorität: 21.12.1990 DE 4041380
(43) Veröffentlichungstag der Anmeldung: 01.07.1992
(73) Patentinhaber: MARTIN GmbH für Umwelt- und Energietechnik, D-80807 München (DE); TECHFORM ENGINEERING AG, CH-8105 Watt (CH)
(72) Erfinder: Martin, Walter Josef, Dipl.-Ing., W-8180 Tegernsee (DE); Martin, Johannes Josef Edmund, Dipl.-Ing., W-8124 Seeshaupt (DE); Hörler, Stefan, CH-8105 Watt (CH); Nikolaus, Thomas, W-7753 Allensbach (DE)
(74) Vertreter: Zmyj, Erwin, Dipl.-Ing., Dipl.-Wirtsch.-Ing.

(56) Entgegenhaltungen:
- EP-A- 0 292 012
- EP-A- 0 309 742
- DE-A- 1 792 027
- US-A- 4 093 544

## Beschreibung

Die Erfindung bezieht sich auf ein Verfahren zum Rückgewinnen bzw. zum Entsorgen von Ammoniak bzw. Ammonium-Verbindungen, die bei Verbrennungsprozessen und der nachfolgenden Gaskühlung und/oder Gasreinigung anfallen.

Bei der Behandlung von Abgasen aus Verbrennungsprozessen zur Minderung der Stickoxid-Konzentration wird entweder Ammoniak vor einem Reduktionskatalysator dem Gasstrom zugeführt (SCR-Prozeß), oder es wird Ammoniak bzw. ein Stoff, der unter Temperatureinwirkung Ammoniak oder Ammonium-Verbindungen bildet (z.B. Harnstoff, Hirschhornsalz, o.ä.) in den Gasstrom im Temperaturbereich oberhalb 700°C eingedüst (SNCR-Prozeß). In beiden Fällen wird ein Teil des Ammoniaks oder der Ammonium-Verbindungen nicht bei der Reduktionreaktion des NOₓ verbraucht und als sogenannter Ammoniakschlupf mit den Abgasen ausgetragen. Dies kann sowohl zu einer Belastung der Atmosphäre als auch der nachgeschalteten Abgasreinigungeinrichtungen führen, wenn Ammoniak bzw. Ammonium-Verbindungen (Ammoniumchlorid, Ammoniumsulfat, Ammoniumbisulfat) mit den Stäuben aus einer Filteranlage ausgeschleust werden.

Eine Abscheidung der Ammonium-Salze, die im Abgasweg bei Temperaturen unterhalb 300°C gebildet werden, kann zwar vor allem mit Tuchfiltern sehr effektiv durchgeführt werden, jedoch ergeben sich bei der weiteren Behandlung dieser Filterstäube Probleme. Die Probleme bestehen darin, daß die Filterstäube zu ihrer besseren Handhabung mit Wasser angefeuchtet werden. Hierbei geben die Ammonium-Salze Ammoniak ab, das in die Atmosphäre entweicht. Um dieses unkontrollierte Entweichen von Ammoniak, das auch bei einer späteren Deponierung auftreten kann, zu verhindern, können die Filterstäube nach dem Stand der Technik einem Stripp-Vorgang unterworfen werden, bei dem Ammoniak weitestgehend ausgetrieben wird. Bei diesem Strippen werden Filterstäube jedoch mit Dampf oder elektrisch erhitzt und eventuell angefeuchtet, wodurch aber auch Schwermetalle und deren Verbindungen, insbesondere Quecksilber, gasförmig entweichen, was zu weiteren Umweltproblemen führt.

Aufgabe der Erfindung ist es, ein Verfahren anzugeben, mit dessen Hilfe das in Form von Ammonium-Salzen in Staubgemischen enthaltene Ammoniak zurückgewonnen werden kann.

Diese Aufgabe wird erfindungsgemäß durch die im Anspruch 1 angegebenen Maßnahmen gelöst. Durch die chargenweise Behandlung der Staubgemische im geschlossenen System, d.h. in geschlossenen Mischern, wird das bei der Anfeuchtung entweichende Ammoniak unter Vakuum abgesaugt, wodurch ein unkontrolliertes Entweichen in die Atmosphäre verhindert wird. Wesentlich ist hierbei der Vorteil, daß keine anderen Schadstoffe, z.B. Schwermetalle, freigesetzt werden, da mit niedrigen Temperaturen gearbeitet wird.

Um möglichst alles in den Staubgemischen in gebundener Form enthaltene Ammoniak zurückzugewinnen, empfiehlt es sich, den Wasseranteil beim Anfeuchten der Staubgemische über das normalerweise zur transportgerechten Anfeuchtung erforderliche Maß hinaus, d.h. auf einen Wassergehalt zwischen 25 und 40 Gew. %, zu erhöhen. Insbesondere führt auch eine Erhöhung des Vakuums zu einem verstärkten Entweichen des Ammoniaks aus diesen festen Verbindungen.

Die Rückgewinnung von Ammoniak aus den Staubgemischen ist dann besonders wirkungsvoll, wenn der pH-Wert der Stäube größer als zehn ist.

Wenn die Staubgemische aus einem Abgasreinigungsverfahren stammen, das einem Verbrennungsprozeß und einer Heißgasentstickungsanlage (SNCR-Verfahren) nachgeschaltet ist, so empfiehlt es sich in weiterer Ausgestaltung der Erfindung, das rückgewonnene Ammoniak dem Abgasreinigungsprozeß wieder zuzuführen, wodurch die Menge der für die Stickoxidreduzierung neu einzusetzenden Chemikalien verringert werden kann.

## Patentansprüche

1. Verfahren zum Rückgewinnen bzw. zum Entsorgen von Ammoniak bzw. Ammonium-Verbindungen aus Staubgemischen, die bei Verbrennungsprozessen, der nachfolgenden Gaskühlung und/oder Gasreinigung anfallen, **dadurch gekennzeichnet**, daß die anfallenden Stäube mit einer Temperatur, die niedriger oder gleich ist derjenigen Temperatur, mit der die Stäube den Verbrennungs-, Kühl- oder Reinigungsprozeß verlassen, in einem geschlossenen System chargenweise mit Wasser gemischt und die dabei entstehenden Brüden unter Vakuum abgezogen werden.

2. Verfahren nach Anspruch 1, **dadurch gekennzeichnet**, daß zur Rückgewinnung von Ammoniak aus den Staubgemischen, der Wassergehalt beim Anfeuchten der Staubgemische zwischen 25 und 40 Gew.% eingestellt wird.

3. Verfahren nach Anspruch 1 oder 2, **dadurch gekennzeichnet**, daß zur Erhöhung der auszutreibenden Ammoniakmenge aus den Staubgemischen, das Vakuum erhöht wird.

4. Verfahren nach einem der Ansprüche 1 bis 3, **dadurch** **gekennzeichnet**, daß der pH-Wert der Stäube größer als zehn ist oder auf einen Wert größer als zehn eingestellt wird.

5. Verfahren nach einem der Ansprüche 1 bis 4, **dadurch** **gekennzeichnet,** daß das rückgewonnene Ammoniak dem Abgasreinigungsprozeß wieder zugeführt wird.

## Claims

1. Process for the recovery or disposal of ammonia or ammonium compounds from dust mixtures produced during combustion processes and subsequent gas cooling and/or gas purification, characterised in that the dusts produced are mixed with water in batches in a closed system at a temperature which is lower than or equal to the temperature at which the dusts leave the combustion, cooling or purification process, and the resulting vapours are discharged in a vacuum.

2. Process according to claim 1, characterised in that, in order to recover ammonia from the dust mixtures, the water content is adjusted to between 25 and 40 % by weight when moistening the dust mixtures.

3. Process according to claim 1 or claim 2, characterised in that the vacuum is increased in order to increase the quantity of ammonia to be expelled from the dust mixtures.

4. Process according to one of claims 1 to 3, characterised in that the pH value of the dusts is greater than ten or is adjusted to a value greater than ten.

5. Process according to one of claims 1 to 4, characterised in that the ammonia recovered is returned to the waste gas purification process.

## Revendications

1. Procédé de récupération ou élimination, dans des mélanges de poussières, d'ammoniaque ou de composés d'ammonium formés lors des processus de combusion, de refroidissement du gaz et/ou de purification du gaz qui s'en suit, caractérisé en ce que les poussières qui se produisent sont, à une température inférieure ou égale à la température à laquelle les poussières sortent du processus de combustion, de refroidissement ou de purification, mélangées avec de l'eau, en charge, dans un système fermé, et en ce que les vapeurs survenant au cours de ce processus sont extraites sous vide.

2. Procédé selon la revendication 1, caractérisée en ce que, pour la récupération de l'ammoniaque des mélanges de poussières, la teneur en eau est comprise, lors de l'humidification des mélanges de poussières, entre 25 et 40% du poids.

3. Procédé selon la revendication 1 ou 2, caractérisée en ce que, pour augmenter la quantité d'ammoniaque extrait des mélanges de poussières, le vide est accru.

4. Procédé selon l'une des revendications de 1 à 3, caractérisé en ce que la valeur du pH des poussières est supérieure à dix ou est réglée sur une valeur supérieure à dix.

5. Procédé selon l'une des revendications de 1 à 4, caractérisé en ce que l'ammoniaque récupéré est ramené dans le processus de purification du gaz.
